# EUROPEAN PATENT APPLICATION

(11) **EP 4 108 937 A1**
(43) Date of publication of application: **28.12.2022**
(21) Application number: 22180809.0
(22) Date of filing: 23.06.2022
(51) Int. Cl.: F04F 5/20, F04F 5/22

(54) **VACUUM EJECTOR SYSTEMS**

(30) Priority: 24.06.2021 US 202117357518
(71) Applicant: Hamilton Sundstrand Corporation, Charlotte, NC 28217-4578 (US)
(72) Inventor: LIAO, Xiaohong, Andover, 06232 (US); LOKHANDWALLA, Murtuza, South Windsor, 06074 (US)
(74) Representative: Dehns

(57) **Abstract**

A vacuum generation system includes a main ejector (102) having a first fluid inlet (124) and a second fluid inlet (126). The second fluid inlet is configured and adapted to pull dissolved gases out of fuel. The system includes a plurality of fluid sources configured and adapted to be variably supplied to the first fluid inlet of the main ejector. A method of modulating pressure in an ejector to generate a vacuum includes supplying a fluid to an ejector from at least one of a plurality of fluid sources, and generating a vacuum with the ejector for removing dissolved gasses out of fuel.

## Description

### BACKGROUND

### 1. Field

The present disclosure relates to ejectors, and more particularly to vacuum ejectors for use in conjunction with oxygen removal units.

### 2. Description of Related Art

Dissolved oxygen in jet fuel plays a significant role in coking of high temperature fuel systems. An Oxygen Removal Unit (O₂RU) can be used to remove oxygen from fuel before use. Removal of oxygen from fuel acts to enable increased fuel temperature, providing an additional heat sink capacity to discharge aircraft thermal loads, while simultaneously reducing specific fuel consumption for the engine. O₂RU systems typically use a vacuum and an O₂ permeable membrane to draw out dissolved gasses from fuel. Similar to land-based gas separation equipment, an electrically or mechanically driven vacuum pump can be used to generate a desired vacuum for oxygen removal from a fluid in an O2RU in aerospace applications.

However, the current shaft driven vacuum pumping technology can have limitations in some aerospace applications. Two limitations include low reliability and large volume and/or relative weight of the vacuum pumping technology. Hence, there is an ever-present need for more compact, reliable and efficient systems and methods for generating a vacuum for an O₂RU. This disclosure provides a solution for this need.

### SUMMARY

A vacuum generation system includes a main ejector having a first fluid inlet and a second fluid inlet. The second fluid inlet is configured and adapted to pull dissolved gases out of fuel. The system includes a plurality of fluid sources configured and adapted to be variably supplied to the first fluid inlet of the main ejector.

In some embodiments, the system includes a second ejector positioned upstream from and in fluid communication with the main ejector to send a fluid thereto. The second ejector can include a fluid outlet in fluid communication with the first fluid inlet of the main ejector. The second ejector can be configured and adapted to drive the main ejector to create a vacuum for removing dissolved gases out of fuel.

The second ejector can include a first fluid inlet and a second fluid inlet. The first fluid inlet of the second ejector can be in fluid communication with a bleed air conduit. The bleed air conduit can include a flow restrictor. The second fluid inlet can be in fluid communication with a fan air conduit. The fan air conduit can include a flow restrictor. The second ejector can define a primary fluid flow path from the first fluid inlet of the second ejector to the fluid outlet of the second ejector. The second ejector can define a second fluid flow path from the second fluid inlet of the second ejector to the primary flow path.

In some embodiments, the system includes a second ejector is positioned downstream from and in fluid communication with the main ejector to receive fluid therefrom. The main ejector can define a primary flow path from the first fluid inlet to a fluid outlet. The second ejector can include a fluid inlet in fluid communication with the fluid outlet of the main ejector. The fluid inlet can be in fluid communication with the fluid outlet of the main ejector is a second fluid inlet of the second ejector. The second ejector includes a first fluid inlet.

The first fluid inlet of the second ejector can be in fluid communication with a bleed air conduit. The bleed air conduit can include a flow restrictor. The second ejector can define a primary fluid flow path from the first fluid inlet of the second ejector to the fluid outlet of the second ejector. The second ejector can define a second fluid flow path from the second fluid inlet of the second ejector to the primary flow path. The fluid inlet of the second ejector can be configured and adapted to reduce an outlet pressure of the outlet of the main ejector below ambient.

The main ejector can define a flow path from the first fluid inlet to an outlet. The first fluid inlet of the main ejector can be in fluid communication with at least one of a fan air conduit or an outlet of the second ejector.

In accordance with another aspect, a method of modulating pressure in an ejector to generate a vacuum includes supplying a fluid to an ejector from at least one of a plurality of fluid sources, and generating a vacuum with the ejector for removing dissolved gasses out of fuel.

The ejector can be a first ejector. The plurality of fluid sources can include at least one of a second ejector, a high pressure source or a low pressure source. Supplying the fluid can include supplying the fluid from the second ejector to a first inlet of the first ejector. The first ejector can be a gas removal ejector. The second inlet of the first ejector can be configured and adapted to pull dissolved gases out of a liquid. Supplying the fluid can include supplying fluid from at least one of a high pressure source or a low pressure source to a first inlet of the first ejector.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1A is a schematic cross-sectional view of an ejector assembly constructed in accordance with the present disclosure, showing a conditioner ejector upstream from a main ejector where the conditioner ejector is being supplied with fan air;
Fig. 1B is a schematic cross-sectional view of the ejector assembly of Fig. 1A, showing the conditioner ejector upstream from a main ejector where the conditioner ejector is being supplied with fan air and bleed air;
Fig. 1C is a schematic cross-sectional view of the ejector assembly of Fig. 1A, showing the conditioner ejector upstream from a main ejector where the conditioner ejector is being supplied with bleed air;
Fig. 1D is a schematic cross-sectional view of an ejector assembly constructed in accordance with the present disclosure, showing a single stage ejector where the ejector is being supplied with bleed air and/or fan air;
Fig. 2A is a schematic cross-sectional view of an ejector assembly constructed in accordance with the present disclosure, showing a conditioner ejector downstream from a main ejector where the main ejector is being supplied with fan air;
Fig. 2B is a schematic cross-sectional view of the ejector assembly of Fig. 2A, showing the conditioner ejector downstream from the main ejector where the conditioner ejector is being supplied with bleed air and air from the main ejector; and
Fig. 2C is a schematic cross-sectional view of the ejector assembly of Fig. 2A, showing the conditioner ejector downstream from the main ejector where the main ejector is being supplied with bleed air.

### DETAILED DESCRIPTION

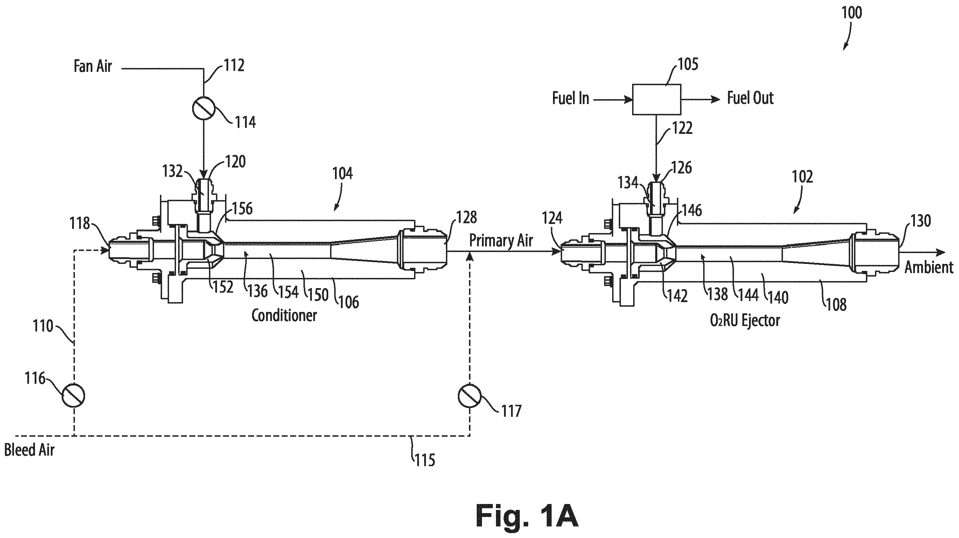

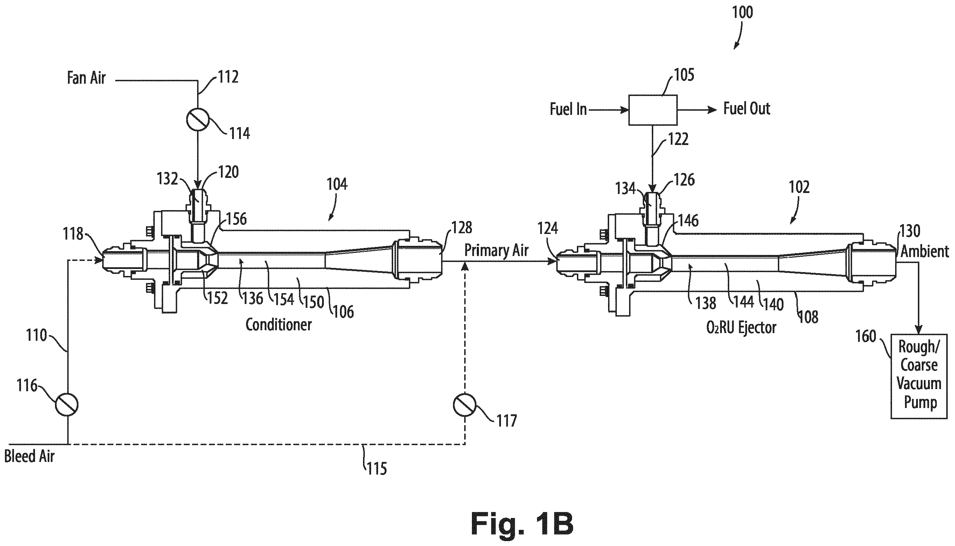

Reference will now be made to the drawings wherein like reference numerals identify similar structural features or aspects of the subject disclosure. For purposes of explanation and illustration, and not limitation, a partial view of an embodiment of a vacuum generation system in accordance with the disclosure is shown in Fig. 1A and is designated generally by reference character 100. Other embodiments of systems in accordance with the disclosure, or aspects thereof, are provided in Figs. 1B-2C as will be described. The systems and methods described herein provide an ejector vacuum generation system, such as one used to generate a vacuum for use in an oxygen removal system to remove dissolved gasses from fuel, with increased reliability and reduced size as compared with traditional shaft-driven vacuum pumping technology.

As shown in Fig. 1A, a vacuum generation system 100 includes a main ejector 102 having a first fluid inlet 124 and a second fluid inlet 126. The second fluid inlet 126 of the main ejector 102 is configured and adapted to pull/remove dissolved gases out of fuel flowing through an oxygen removal unit 105 via an outlet line 122. Main ejector 102 utilizing a pressurized fluid medium, e.g. bleed air or a mixture thereof, has no moving parts and is highly robust. Generally, however, an ejector is a thermodynamically inefficient device and consumes more energy/bleed air than a vacuum pump. This is also a significant drawback for an oxygen removal unit (O₂RU) system given that one primary focus of the system is to reduce specific fuel consumption. A second ejector 104, e.g. a conditioner ejector, is positioned upstream from the main ejector 102 to send a fluid thereto. Second ejector 104 acts to mix two fluid sources in certain scenarios (e.g. high pressure bleed air and lower pressure fan air). Each of ejectors 102 and 104 are vacuum ejectors, which produce vacuum by means of the Venturi effect. Ejector 102 includes a housing 140 defining a primary flow path 138, and a Venturi portion 142 positioned within the primary flow path 138 of the housing 140 downstream from inlet 124. The fluid leaving the Venturi portion 142 is flowing at a high velocity resulting in it having low pressure, thus generating a vacuum and drawing in fluid from second fluid inlet 126. Generally, the pressure of fluid entering at second fluid inlet 126 from oxygen removal unit 105 is less than 1 psia (this can be said for the pressure at the O₂RU outlet line 122/222 for each embodiment described herein). A portion of the housing 140 converges at converging portion 146 into a mixing chamber/portion 144 and then expands in cross-sectional area downstream. In the mixing chamber 144, the high velocity working fluid entering at inlet 124 mixes with the fluid that is drawn in by the vacuum at inlet 126, imparting enough velocity for it to be ejected from an outlet 130. Ejectors 102 and 104 have no moving parts, which can be beneficial from a maintenance and cost perspective.

With continued reference to Fig. 1A, the second ejector 104 includes a fluid outlet 128 in fluid communication with the first fluid inlet 124 of the main ejector 102. The first fluid inlet 124 of the main ejector 102 is in fluid communication with the fluid outlet 128 of the second ejector 104. The second ejector 104 is structurally the same as main ejector 102. The second ejector has a housing 150, which is the same as housing 140, a Venturi portion 152, which is the same as Venturi portion 142, a mixing chamber 154, which is the same as mixing chamber 144, and a converging portion 156, which is the same as converging portion 146. The second ejector 104 is configured and adapted to drive pressure input at inlet 124 of the main ejector 102 to create the required vacuum for removing dissolved gases from of fuel. The second ejector 104 is configured and adapted to use one or more of compressed air sources from the engine (bleed air) and/or fan (fan air) to help main ejector 102 generate the desired vacuum for oxygen removal at the minimum net fuel consumption. The second ejector 104 reduces the outlet pressure for the main ejector 102 below ambient.

As shown in Fig. 1A, the second ejector 104 includes a first fluid inlet 118 and a second fluid inlet 120. The second ejector 104 defines a primary fluid flow path 136 from the first fluid inlet 118 of the second ejector 104 to the fluid outlet 128 of the second ejector 104. The second ejector 104 defines a second fluid flow path 132 from the second fluid inlet 120 of the second ejector 104 to the primary flow path 136. The first fluid inlet 118 of the second ejector 104 is in fluid communication with a bleed air conduit 110. The bleed air conduit 110 includes a flow restrictor 116, e.g. a valve. The second fluid inlet 120 is in fluid communication with a fan air conduit 112. The fan air conduit 112 includes a flow restrictor 114, e.g. a valve. Valves 116 and 114 allow for the fluid supply source to inlet 118 to be varied depending on the pressures of the various sources. The connection of ejector 104 to both bleed air and/or fan air via conduits 110 and 112, respectively, allows for minimization and/or elimination of air consumption from a high pressure source (i.e. bleed air from the engine) and substitution with a lower pressure source (i.e. fan bypass air) when the conditions permit, while still having access to the higher pressure bleed air source when needed. This results in reducing the amount of higher energy air utilized for generating the vacuum of main ejector 102 and hence reduces the net fuel consumption of the combined oxygen removal unit and vacuum generation system.

As shown in Fig. 1A, when the ratio of fan air pressure (Pfan) to ambient pressure (P_{amb}) is high enough, for example when an aircraft is cruising at high altitude, both bleed air valves 116 and 117 are closed, and fan air valve 114 is open to modulate the fan air through conditioner ejector 104. In this case, only fan air pressure is needed and used to drive the main ejector 102 to generate the required vacuum for O₂ removal in the oxygen removal unit 105. Fan air supplied through the fan air conduit 112 can, for example, be supplied at about 25-30 psia, but then may be modulated by flow restrictor 114 to the desired pressure, e.g., ranging from 10-25 psia, depending on P_{amb}. In Fig. 1A, the pressure of the primary air provided at inlet 124 is generally the same as P_{fan} supplied at inlet 120. The ambient pressure (P_{amb}) can range from 3 to 6 psia. In some scenarios, such as those of Fig. 1A or those described below, P_{amb} can be as low as 2.7 psia and/or up to 14.7 psia.

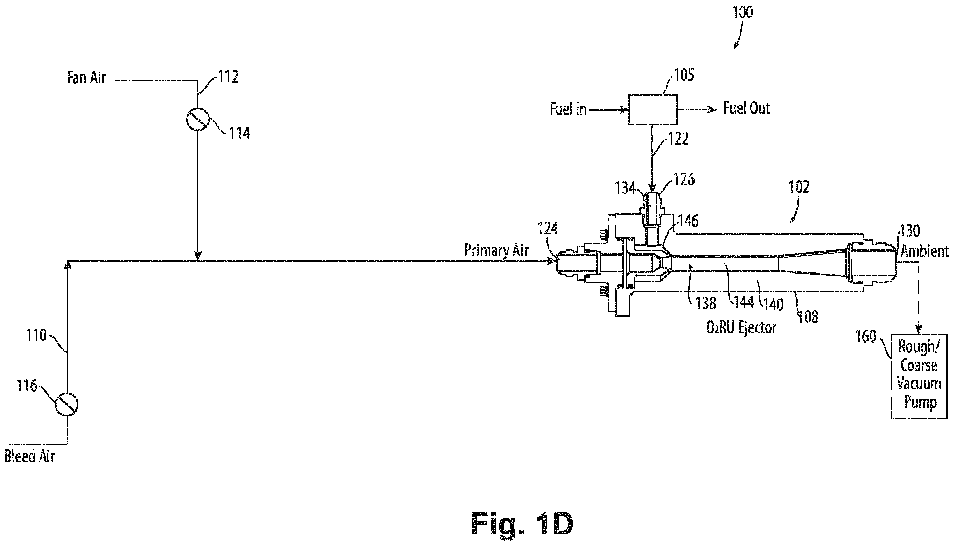

With reference now to Fig. 1B, when the ratio of P_{fan} to P_{amb} is low, for example during lower altitude and lower engine power conditions, bleed air valve 116 is opened in combination with fan air valve 114, and the latter will be widely open to take advantage of the fan air pressure. Bleed air valve 116 modulates the bleed air through first fluid inlet 118. Bleed air supplied through the bleed air conduit 110 can, for example, be initially supplied at over 100 psia, but then may be modulated by flow restrictor 116 to the desired pressure, e.g., ranging from 50-100 psia, for entry into inlet 118. In the embodiment of Fig. 1B, the fan air valve 114 can be entirely open, while bleed air valve 116 can be varied as needed to use the bleed air to boost the combined pressure in mixing chamber 154 of conditioner ejector 104, thereby meeting the required inlet pressure at first fluid inlet 124 of the main ejector 102 to drive the main ejector 102 to generate the required vacuum for O₂ the oxygen removal unit 105. In Fig. 1B, the primary air pressure at input 124 can, for example, range from 25-50 psia. The pressure at ambient downstream from outlet 130 can range from 8-12 psia. As shown in Fig. 1B, in accordance with some embodiments, it is contemplated that a vacuum pump 160 could be utilized downstream from the main ejector 102. In some cases, for example as shown in Fig. 1D, this would permit direct feeding of fan and/or bleed air into inlet 124 such that conditioner ejector 104 would be removed. In this embodiment, the system 100 would be a single stage ejector system with ejector 104 removed and the primary air upstream from inlet 124 is directly coupled to fan air conduit 112 and bleed air conduit 110. Each conduit 110 and 112 would retain their respective flow restrictors 114 and 116, such that inlet 124 could receive pressurized fluid (modulated or unmodulated) from one or both of fan air conduit 112 and bleed air conduit 110. In some embodiments of Fig. 1D, it is contemplated that vacuum pump 160 may not be needed.

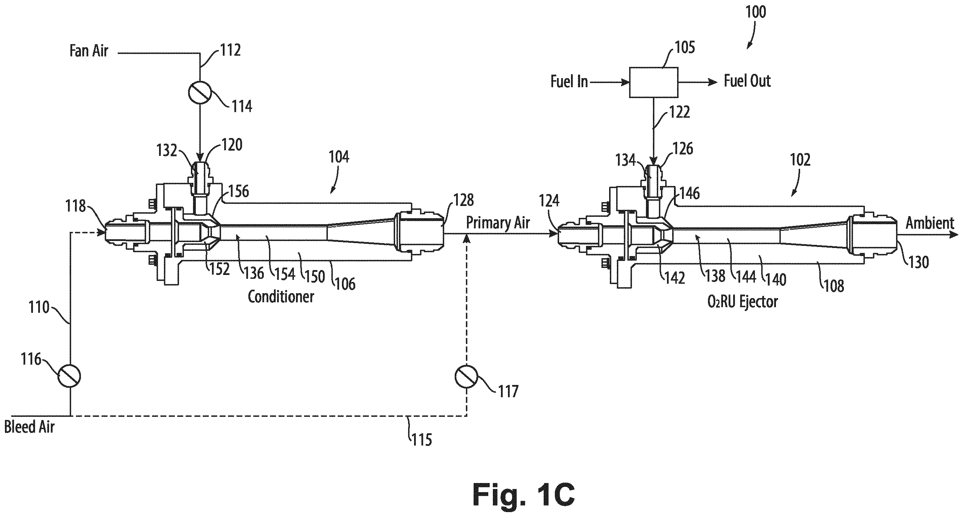

As shown in Fig. 1C, when the ratio of P_{fan} to P_{amb} is lower than that of Fig. 1B, for example during a ground idle condition, bleed air valve 116 is opened and fan air valve 114 and bleed air valve 117 are both closed. Bleed air valve 116 modulates the bleed air through first fluid inlet 118 and the entire conditioning ejector 104. In the embodiment of Fig. 1C, the bleed air valve 116 provides the required inlet pressure at first fluid inlet 124 of the main ejector 102 to drive the main ejector 102 to generate the required vacuum for O₂ in the oxygen removal unit 105. In Fig. 1C, the primary air pressure at input 124 can, for example, range from 50-55 psia, where P_{amb} ranges from 13 to 14.7 psia. In accordance with another embodiment of Fig. 1C, if the pressure drop along primary flow path 136 of the conditioning ejector 104 is too high to meet the required inlet pressure at inlet 124, a bypass conduit 115 can be used to divert the bleed air around conditioning ejector 104 and directly to inlet 124 of the main ejector 102. In this case, bleed air valve 117 is opened, while bleed air valve 116 and fan air valve 114 are closed.

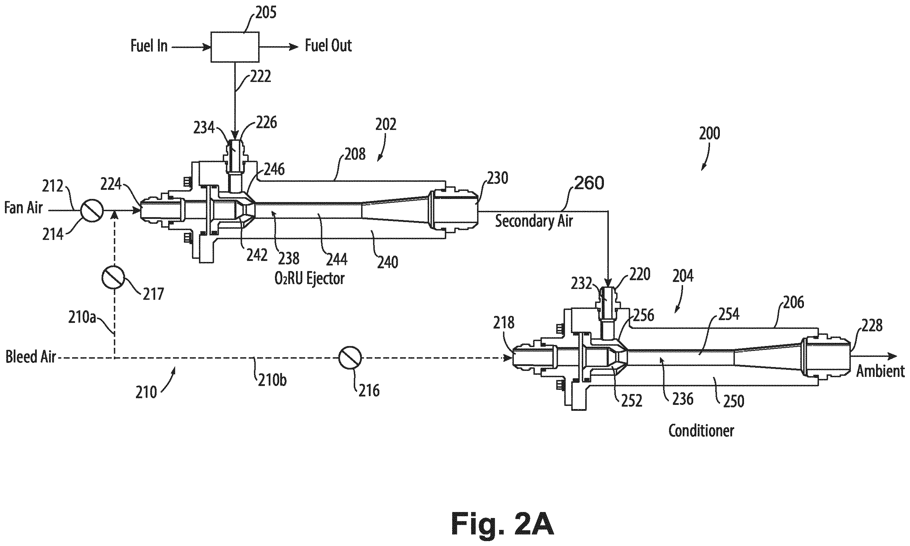

As shown in Figs. 2A-2C, a vacuum generation system 200 includes a main ejector 202 having a first fluid inlet 224 and a second fluid inlet 226. In system 200, a conditioning ejector 204, e.g. the second ejector 204, is positioned downstream from a main ejector 202.
The main ejector 202 defines a primary flow path 238 from a first fluid inlet 224 to a fluid outlet 230. The main ejector 202 defines a second flow path 234 between a second fluid inlet 226 of the main ejector and the first flow path 238. The second fluid inlet 226 of the main ejector 202 is configured and adapted to pull dissolved gases out of fuel flowing through an oxygen removal unit 205. Generally, the pressure of fluid entering at second fluid inlet 226 is less than 1 psia. Each of ejectors 202 and 204 have no moving parts. The main ejector 202 is structurally the same as main ejector 102. The main ejector 202 has a housing 240, which is the same as housing 140, a Venturi portion 242, which is the same as Venturi portion 142, a mixing chamber 244, which is the same as mixing chamber 144, and a converging portion 246, which is the same as converging portion 146.

As shown in Fig. 2A, the second ejector 204 includes a first fluid inlet 218. The second ejector 204 includes second fluid inlet 220 in fluid communication with the fluid outlet 230 of the main ejector 202. The second ejector 204 is structurally the same as the main ejector 202. The second ejector 204 has a housing 250, which is the same as housing 240, a Venturi portion 252, which is the same as Venturi portion 242, a mixing chamber 254, which is the same as mixing chamber 244, and a converging portion 256, which is the same as converging portion 246. In the embodiment of system 200, the second ejector 204, e.g. the conditioner ejector 204, reduces the outlet pressure at fluid outlet 230 for the main ejector 202 below ambient, which helps to generate the vacuum for pulling dissolved gases out of fuel flowing through oxygen removal unit 205. The main ejector 202 uses compressed air sources from the engine (bleed air) and/or fan (fan air) to help main ejector 202 generate the desired vacuum for oxygen removal at the minimum net fuel consumption.

With continued reference to Fig. 2A, the second ejector 204 defines a primary fluid flow path 236 from the first fluid inlet 218 of the second ejector 204 to the fluid outlet 228 of the second ejector 204. The second ejector 204 defines a second fluid flow path 232 from the second fluid inlet 120 of the second ejector 104 to the primary flow path 236. The first fluid inlet 224 of the main ejector 202 is in fluid communication with a fan air conduit 212. The fan air conduit 212 includes a flow restrictor 214, e.g. a valve. The first fluid inlet 224 of the main ejector 202 is in fluid communication with a bleed air conduit 210. A flow restrictor 217, e.g. a valve, is positioned on a first portion 210a of the bleed air conduit 210 upstream from the first fluid inlet 224. The first fluid inlet 218 of the second ejector 204 is in fluid communication with the bleed air conduit 210. A second portion 210b of the bleed air conduit 210 includes a flow restrictor 216, e.g. a valve. The connection of main ejector 202 to both bleed air and/or fan air via conduits 210 and 212, respectively, allows for minimization and/or elimination of air consumption from a high pressure source (i.e. bleed air from the engine) and substitution with a lower pressure source (i.e. fan bypass air) when the conditions permit, while still having access to the higher pressure bleed air source and/or a second stage ejector, e.g., second ejector 204, to generate a lower back pressure. This reduces the amount of higher energy air utilized for generating the vacuum of main ejector 202 and hence reduces the net fuel consumption of the combined oxygen removal unit and vacuum generation system. In accordance with some embodiments, it is contemplated that only main ejector 202 may be required, such that conditioner ejector 204, valve 216 and the portion of bleed air conduit 210a connected to ejector 204 would be removed. In this embodiment, the system 200 would be a single stage ejector system where main ejector 202 still was able to utilize and modulate the bleed air and/or fan air at inlet 224.

As shown in Fig. 2A, when the ratio of fan air pressure (Pfan) to ambient pressure (P_{amb}) is high enough, both bleed air valves 216 and 217 are closed, and fan air valve 214 is open to modulate the fan air through main ejector 202. In this case, P_{fan} can be lowered if needed to by flow restrictor 214 (e.g., P_{fan} upon entry into inlet 224 ranges from 10-15 psia), and only fan air pressure is needed and used to drive the main ejector 202 to generate the required vacuum for O₂ the oxygen removal unit 205. In this embodiment, the discharge air from outlet 230 flows through the conditioner ejector 204 and downstream then to the ambient air (where P_{amb} ranges from 3 to 4 psia) without further pressure modulation, except for potential natural pressure losses through the conditioner ejector 204.

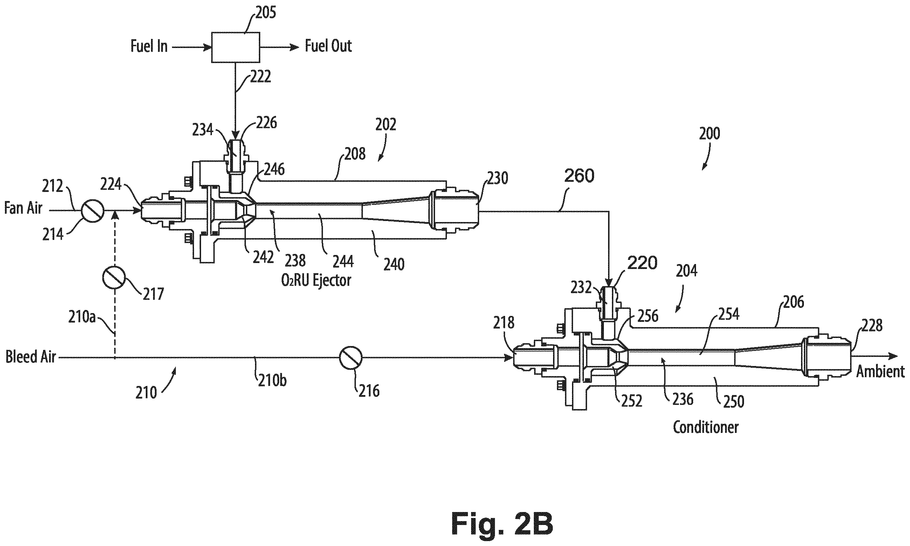

With reference now to Fig. 2B, when the ratio of Pfan to Pamb is low, bleed air valve 216 is opened in combination with fan air valve 214, and the latter will be widely open to take advantage of the fan air pressure. Bleed air valve 216 modulates the bleed air through to the conditioner ejector 204, which creates a lower back pressure for the main ejector 202. For example, the pressure in secondary air line 260 of Fig. 2B can range from 5-7 psia, while the pressure at ambient downstream from outlet 228 can range from 8-12 psia. In this case, bleed air valve 216 can modulate the bleed air to a lower pressure, e.g., 50-100 psia, before entry into inlet 218.

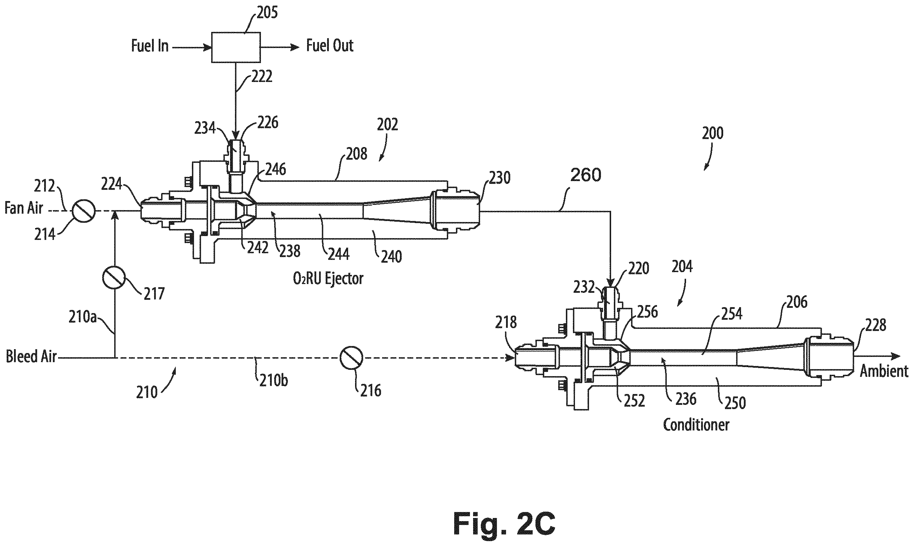

As shown in Fig. 2C, when the ratio of P_{fan} to P_{amb} is lower than that of Fig. 2B, bleed air valve 217 is opened and fan air valve 214 and bleed air valve 216 are both closed. Bleed air valve 217 modulates the bleed air through first fluid inlet 224 of the main ejector 202. In the embodiment of Fig. 2C, the bleed air valve 217 and conduit 210 provide the required inlet pressure directly to first fluid inlet 224 of the main ejector 202 to drive the main ejector 202 to generate the required vacuum for O₂ the oxygen removal unit 205. In this embodiment, the pressure at inlet 224 can, for example, range from 50-55 psia, where P_{amb} ranges from 13 to 14.7 psia. In this embodiment, the discharge air from outlet 230 flows through the conditioner ejector 204 and downstream then to the ambient air without further pressure modulation, except for potential natural pressure losses through the conditioner ejector 204.

In accordance with another aspect, a method of modulating pressure in an ejector, e.g. a first ejector 102 or 202, to generate a required vacuum includes supplying a fluid to the ejector from at least one of a plurality of fluid sources, e.g. a bleed air conduit 110 or 210, a fan air conduit 112 or 212, or a second ejector 104. The bleed air and/or fan air sources can be varied/modulated by using valves to provide the desired pressure to the ejector. The method includes generating a vacuum with the ejector by pulling dissolved gasses out of fuel with the first ejector. The plurality of fluid sources includes a second ejector 104, as shown in Figs. 1A-1C, a high pressure source, e.g. like bleed air conduit 110 or 210, and/or a low pressure source, e.g., like fan air conduit 112 or 212. Supplying the fluid includes supplying the fluid from the second ejector to a first inlet, e.g. inlet 124, of the first ejector. The first ejector is a gas removal ejector. A second inlet, e.g., second inlet 126, of the first ejector is configured and adapted to pull dissolved gases out of a liquid, e.g. a fuel going through a fuel degassing unit 105. In some embodiments, supplying the fluid includes supplying fluid from the high pressure source and/or the low pressure source to the first inlet of the first ejector, e.g. as shown in Figs. 2A-2C.

The methods and systems of the present disclosure, as described above and shown in the drawings, provide for vacuum generation systems having ejectors in fluid communication with multiple air sources to provide air flow modulation as needed. While the apparatus and methods of the subject disclosure have been shown and described with reference to preferred embodiments, those skilled in the art will readily appreciate that changes and/or modifications may be made thereto without departing from the scope of the invention as defined by the claims. Those skilled in the art will readily appreciate that a combination of both embodiments and/or other multi-stage ejector configurations could be used to meet various mission conditions in an optimal manner.

## Claims

1. A vacuum generation system comprising:
a main ejector (102) having a first fluid inlet (124) and a second fluid inlet (126), wherein the second fluid inlet is configured and adapted to pull dissolved gases out of fuel; and
a plurality of fluid sources configured and adapted to be variably supplied to the first fluid inlet of the main ejector.

2. The system as recited in claim 1, further comprising a second ejector (104) positioned upstream from and in fluid communication with the main ejector to send a fluid thereto, wherein the second ejector includes a fluid outlet (128) in fluid communication with the first fluid inlet of the main ejector, wherein the second ejector is configured and adapted to drive the main ejector to create the a vacuum for removing dissolved gases out of fuel.

3. The system as recited in claim 2 wherein the second ejector includes a first fluid inlet (118) and a second fluid inlet (120).

4. The system as recited in claim 3, wherein the first fluid inlet of the second ejector is in fluid communication with a bleed air conduit (110), and/or wherein the second fluid inlet of the second ejector is in fluid communication with a fan air conduit (112).

5. The system as recited in claim 3, wherein the second ejector defines a primary fluid flow path from the first fluid inlet of the second ejector to the fluid outlet of the second ejector, and optionally wherein the second ejector defines a second fluid flow path from the second fluid inlet of the second ejector to the primary flow path.

6. The system as recited in claim 1, further comprising a second ejector (104) positioned downstream from and in fluid communication with the main ejector to receive a fluid therefrom, wherein the main ejector defines a primary flow path from the first fluid inlet to a fluid outlet (128), wherein the second ejector includes a fluid inlet (118) in fluid communication with the fluid outlet of the main ejector.

7. The system as recited in claim 6, wherein the fluid inlet in fluid communication with the fluid outlet of the main ejector is a second fluid inlet (120) of the second ejector, wherein the second ejector includes a first fluid inlet.

8. The system as recited in claim 7, wherein the first fluid inlet of the second ejector is in fluid communication with a bleed air conduit, and/or wherein the second ejector defines a primary fluid flow path from the first fluid inlet of the second ejector to the fluid outlet of the second ejector, and optionally wherein the second ejector defines a second fluid flow path from the second fluid inlet of the second ejector to the primary flow path.

9. The system as recited in claim 6, wherein the fluid inlet of the second ejector is configured and adapted to reduce an outlet pressure of the outlet of the main ejector below ambient.

10. The system as recited in any preceding claim, wherein the main ejector defines a flow path from the first fluid inlet to an outlet.

11. The system as recited in any preceding claim, wherein the first fluid inlet of the main ejector is in fluid communication with at least one of a fan air conduit or a bleed air conduit.

12. A method of modulating pressure in an ejector to generate a vacuum, the method comprising:
supplying a fluid to an ejector from at least one of a plurality of fluid sources; and
generating a vacuum with the ejector for removing dissolved gasses out of fuel with the ejector.

13. The method as recited in claim 12, wherein the ejector is a first ejector, wherein the plurality of fluid sources includes at least one of a second ejector, a high pressure source or a low pressure source.

14. The method as recited in claim 13, wherein supplying the fluid includes supplying the fluid from the second ejector to a first inlet of the first ejector, wherein the first ejector is a gas removal ejector, wherein the second inlet of the first ejector is configured and adapted to pull dissolved gases out of a liquid.

15. The method as recited in claim 12, wherein supplying the fluid includes supplying fluid from at least one of a high pressure source or a low pressure source to a first inlet of the ejector, wherein the ejector is a gas removal ejector, wherein the second inlet of the ejector is configured and adapted to pull dissolved gases out of a liquid.
